# EUROPÄISCHE PATENTSCHRIFT

(11) **EP 2 660 080 B1**
(45) Veröffentlichungstag und Bekanntmachung des Hinweises auf die Patenterteilung: **21.06.2017**
(21) Anmeldenummer: 13164223.3
(22) Anmeldetag: 18.04.2013
(51) Int. Cl.: B60C 11/12

(54) **Laufstreifenprofil eines Fahrzeugreifens**
Run strip profile of a vehicle tyre
Profil de bande de roulement d'un pneu de véhicule

(30) Priorität: 04.05.2012 DE 102012103945
(43) Veröffentlichungstag der Anmeldung: 06.11.2013
(73) Patentinhaber: Continental Reifen Deutschland GmbH, 30165 Hannover (DE)
(72) Erfinder: Wüst, Alexander, 30926 Seelze (DE); Fernandez, Tomas, 30177 Hannover (DE); Goncalves Ankiewicz, Dr. Amélia Olga, 30559 Hannover (DE); Rittweger, Stefan, 30163 Hannover (DE); Dobczyk, Klaudia, 30419 Hannover (DE); Buchinger, Thomas, 30974 Wennigsen (DE); Pokutta-Paskaleva, Dr. Anastassia, 30306 Atlanta, GA (US)
(74) Vertreter: Preusser, Andrea

(56) Entgegenhaltungen:
- WO-A1-2009/077808
- WO-A1-2010/136989
- WO-A1-2012/001488

## Beschreibung

Die Erfindung betrifft ein Laufstreifenprofil eines Fahrzeugreifens mit Profilpositiven wie Profilblöcken oder Laufstreifenbändern, welche Feineinschnitte aufweisen, wobei die Feineinschnitte in Aufsicht eine etwa Ω-förmige Geometrie aufweisen:
- mit zwei in etwa in axialer Richtung angeordneten axialen Abschnitten, welche auf einer gemeinsamen, gedachten Geraden mit einem Abstand a zueinander angeordnet sind,
- mit einer zwischen diesen axialen Abschnitten angeordneten mittigen Vorwölbung, wobei die Vorwölbung eine in axialer Richtung gemessene maximale Ausdehnung b aufweist,
- wobei a < b ist, so dass Hinterschneidungen gebildet sind und
- wobei der Feineinschnitt, weiterhin in Aufsicht betrachtet, wenigstens einen abschnittsweisen Bereich größerer Breite aufweist.

Ein derartiger Fahrzeugluftreifen ist beispielsweise aus der WO 2010/136989 A1 bekannt. Durch die vorgenannte Ω-förmige Geometrie der Feineinschnitte ist eine Verschränkung und somit Versteifung der Profilblöcke bzw. -bänder in allen Richtungen bewirkt. Die Verschränkung ist durch gegenseitige Abstützeffekte, insbesondere der Vorwölbung, von gegenüberliegenden Feineinschnittwänden erhalten.

Feineinschnitte dienen beispielsweise bei Nutzfahrzeugreifen dazu, bei nasser Fahrbahn den Wasserfilm zu zertrennen, um bessere Nasseigenschaften dieses Laufstreifens zu erhalten.

Bei PKW-Reifen sind die Feineinschnitte bei Fahrzeugreifen für den Einsatz unter winterlichen Fahrbedingungen ausgebildet und dienen beispielsweise dazu, die Fahreigenschafen auf winterlicher Fahrbahn zu verbessern, indem vermehrt Griffkanten zur Verfügung gestellt werden und indem der in den Feineinschnitten aufgenommene Schnee die Haftung des Reifens durch eine Schnee-Schnee-Verzahnung erhöht.

Üblicherweise weisen Feineinschnitte eine Breite von 0,5 mm bis 3,0 mm auf.

Ein gattungsgemäßes Laufstreifenprofil ist zudem aus der DE 100 49 936 B4 bekannt geworden. Die DE 100 49 936 B4 hat ein Laufstreifenprofil zum Gegenstand, welches aus Profilblöcken besteht. Die Profilblöcke weisen Feineinschnitte mit Ω-förmiger bzw. puzzleteilartiger Geometrie auf. Eine derartige Ausbildung der Feineinschnitte bewirkt eine Verschränkung und somit Versteifung der Profilblöcke bzw. -bänder in allen Richtungen. Die Verschränkung ist durch gegenseitige Abstützeffekte, insbesondere der Vorwölbung, von gegenüberliegenden Feineinschnittswänden erhalten.

Man ist bestrebt, die Fahreigenschaften des Reifens, insbesondere die Wintereigenschaften weiter zu verbessern.

Es ist die Aufgabe der Erfindung, ein Laufstreifenprofil eines Fahrzeugreifens zur Verfügung zu stellen, das verbesserte Wintereigenschaften als auch verbesserte Nass- und Trockenbremseigenschaften aufweist.

Gelöst wird die Aufgabe, indem die Breite des Feineinschnittes in dem Bereich der größeren Breite 2 x - 4 x so breit ist wie in den Abschnitten normaler Breite.

Es ist erfindungsgemäß ein Laufstreifenprofil geschaffen, das - in Aufsicht auf einen Feineinschnitt - durch eine etwa Ω-förmige Geometrie des Feineinschnittes Verschränkungseffekte in allen Richtungen zwischen benachbarten Profilblock- oder - bandabschnitten bewirkt. Die Ω-förmige Geometrie kann gleichfalls als pilzartige Geometrie beschrieben werden. Durch die Verschränkungseffekte in allen Richtungen ist eine optimale Steifigkeit der Profilelemente erhalten. Der Feineinschnitt weist eine bestimmte Breite aus, wobei abschnittsweise wenigstens ein Bereich größerer Breite angeordnet ist. Es wechseln sich Bereiche normaler Breite mit wenigstens einem Bereich größerer Breite in der Längserstreckung des Feineinschnittes ab.

Im Durchlauf des Reifens auf der Fahrbahnoberfläche verformen sich die Profilelemente des Laufstreifens. Die Art und Intensität dieser Verformung wird u.a. durch die Geometrie der in diesem Profilelement angeordneten Feineinschnitte bestimmt. Bei dem erfindungsgemäßen Laufstreifen verbleibt während der Verformung durch den wenigstens einen abschnittsweisen Bereich größerer Breite immer eine verbleibende Öffnung der Feineinschnitte. In dieser Öffnung kann für gute Fahreigenschaften auf winterlicher Fahrbahn Schnee aufgenommen werden, wodurch die vorteilhafte Schnee-Schnee-Reibung und somit eine vorteilhafte Haftung erreicht ist. Andererseits sind die Öffnungen auf nasser Fahrbahn vorteilhaft, weil Wasser in diesen Öffnungen aufgenommen werden kann. Zudem sind durch die verbleibenden Öffnungen mehr Kanten zur Verfügung gestellt, wodurch verbesserte Trocken- und Nassbremseigenschaften erhalten sind. Es entstehen beim Abrollen des Laufstreifenprofiles sich nicht schließende Einschnitte, welche dafür sorgen, dass Teile der Kanten erhalten bleiben.

"Axiale Richtung" meint die Richtung entlang der Reifenachse.

"Umfangsrichtung" meint die Richtung entlang des Reifenabrollens.

"Radiale Richtung" meint die Richtung vom Reifenmittelpunkt zum Laufstreifen.

"Breite des Feineinschnittes" meint die Ausdehnung eines Feineinschnittes quer zu seiner Längserstreckung.

In einer Ausführungsform ist der wenigstens eine Bereich größerer Breite in einem sich etwa axial erstreckenden Abschnitt des Feineinschnittes angeordnet. Es wird der Wasserfilm aufgebrochen, es sind sogenannte "Wischkanten" zur Verfügung gestellt, so dass die Nässeeigenschaften des Laufstreifenprofils verbessert sind.

In einer anderen Ausführungsform ist je ein Bereich größerer Breite in je einem der beiden sich quer erstreckenden Abschnitte des Feineinschnittes angeordnet und nimmt vorzugsweise mehr als 50% der Länge des sich quer erstreckenden Abschnittes ein, wodurch der Nassgriff bei Kurvenfahrten verbessert ist.

Vorteilhaft ist es, wenn, in Aufsicht auf den Feineinschnitt betrachtet, dessen Richtungsänderungen im Feineinschnittverlauf durch Radien gebildet sind.

Zweckmäßig ist es, wenn die Übergänge von Bereichen breiter Breite zu Bereichen normaler Breite durch Radien gebildet sind. Hierdurch ist die Gefahr der Rissbildung vermieden.

In einer Ausführungsform sind die Bereiche größerer Breite abschnittsweise in den beiden axialen Abschnitten und/oder in dem sich axial erstreckenden Bereich der Vorwölbung angeordnet sind.

Ein derartiges Laufstreifenprofil ist in einem Fahrzeugreifen, vorzugsweise einem Nutzfahrzeugreifen oder einem PKW-Reifen einzusetzen.

Weitere Merkmale, Vorteile und Einzelheiten der Erfindung werden anhand der Zeichnungen, die schematische Ausführungsbeispiele darstellen, näher beschrieben. Dabei zeigt die
Fig. 1 eine dreidimensionale Ansicht eines Laufstreifenprofils eines Fahrzeugreifens mit Feineinschnitten in den Profilbändern ;
Fig. 2 eine dreidimensionale Darstellung eines Feineinschnittes;
Fig. 3 eine dreidimensionale Darstellung eines anderen Feineinschnittes;
Fig. 4 in der linken Zeichnungshälfte die Seitenansicht eines Laufstreifens eines Reifens und in der rechten Zeichnungshälfte die Aufsicht auf ein Profilband dieses Laufstreifens, wobei der obere Feineinschnitt im unbelasteten Zustand und der untere Feineinschnitt im belasteten Zustand beim Abrollen des Laufstreifens dargestellt ist.

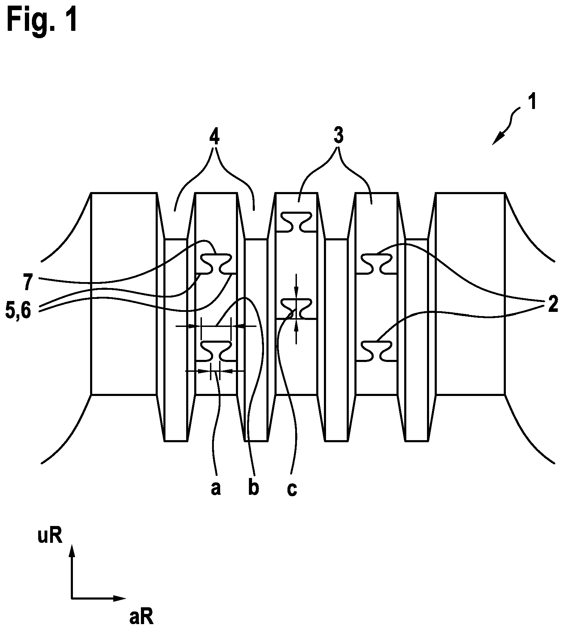

Die **Fig. 1** zeigt eine dreidimensionale Ansicht eines Laufstreifenprofils 1 eines Fahrzeugreifens mit Feineinschnitten 2 in den Profilbändern 3. Jedes Profilband 3 ist beidseitig von Umfangsrillen 4 begrenzt. Der Feineinschnitt 2 durchquert das Profilband 3 in axialer Richtung aR vollständig. Der Feineinschnitt 2 weist - in Aufsicht - eine etwa Ω-förmige bzw. pilzartige Geometrie aus zwei in etwa in axialer Richtung aR auf einer gemeinsamen gedachten Geraden angeordneten, mit einem Abstand a voneinander beabstandeten axialen Abschnitten 5, 6 und einer zwischen diesen Abschnitten 5, 6 angeordneten, in etwa in Umfangsrichtung uR ausgerichteten mittigen Vorwölbung 7 mit einer in axialer Richtung aR gemessenen maximalen Ausdehnung b auf, wobei a < b. In Aufsicht auf den Feineinschnitt 2 sind alle Richtungsänderungen im Feineinschnittverlauf durch Radien gebildet.

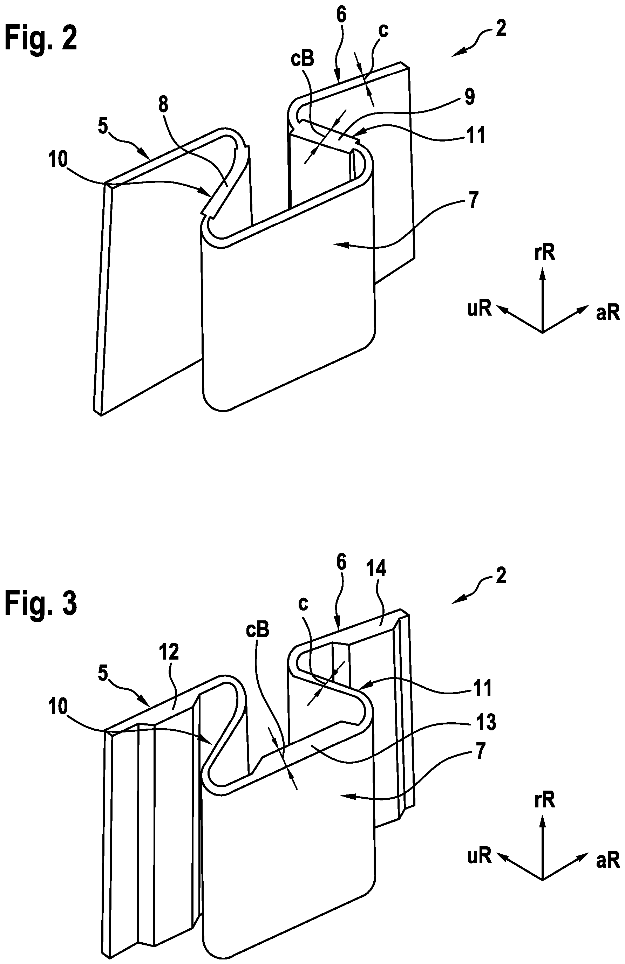

Die **Fig. 2** zeigt eine dreidimensionale Darstellung eines Feineinschnittes 2 des Laufstreifenprofils 1 der Fig. 1. Dargestellt sind die beiden Feineinschnittwände, welche zwischen sich einen Hohlraum einschließen. Der Feineinschnitt 2 weist, in Aufsicht betrachtet, wenigstens einen abschnittsweisen Bereich größerer Breite 8, 9 auf. Hier sind zwei abschnittsweise Bereiche größerer Breite 8, 9 angeordnet, welche in je einem der beiden sich quer erstreckenden Abschnitte 10, 11 des Feineinschnittes 2 angeordnet sind. Die Bereiche größerer Breite 8, 9 sind gleich lang und nehmen mehr als 50% der Länge des sich quer erstreckenden Abschnittes 10, 11 ein. Die Breite bB des Feineinschnittes 2 in dem Bereich der größeren Breite ist 3 x so breit ist wie in den Abschnitten normaler Breite b. Über den Tiefenverlauf des Feineinschnittes bleibt dessen Geometrie gleich.

Die **Fig. 3** zeigt eine dreidimensionale Darstellung eines anderen Feineinschnittes 2. Dargestellt sind die beiden Feineinschnittwände, welche zwischen sich einen Hohlraum einschließen. Der Feineinschnitt 2 weist, in Aufsicht betrachtet, wenigstens einen abschnittsweisen Bereich größerer Breite 12, 13, 14 auf. Hier sind drei abschnittsweise Bereiche größerer Breite 12, 13, 14 angeordnet, welche in je einem axialen Abschnitte 5, 6 und in dem sich axial erstreckenden Bereich der Vorwölbung 7 angeordnet sind. Die Bereiche größerer Breite der axialen Abschnitte 12, 13 sind gleich lang und nehmen mehr als 50% der Länge des axialen Abschnittes 5, 6 ein. Die Breite bB des Feineinschnittes 2 in jedem Bereich der größeren Breite ist 2,5 x bis 3x so breit ist wie in den Abschnitten normaler Breite b. Über den Tiefenverlauf des Feineinschnittes bleibt dessen Geometrie gleich. Die Übergänge von Bereichen breiter Breite 12, 13, 14 zu Bereichen normaler Breite sind durch Radien gebildet.

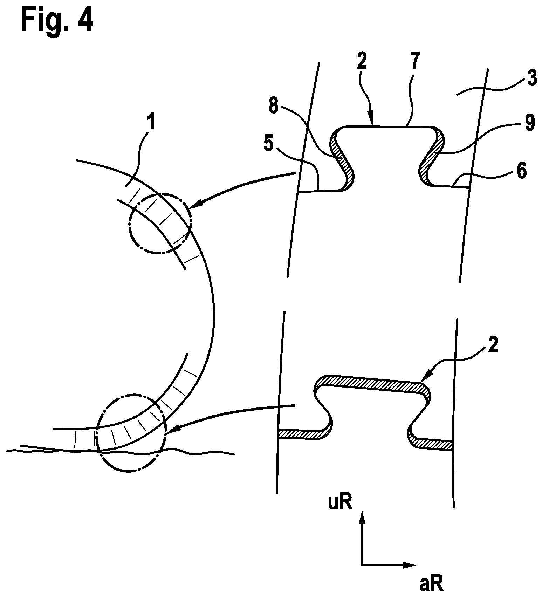

Die **Fig. 4** zeigt in der linken Zeichnungshälfte die Seitenansicht eines Laufstreifens eines Reifens und in der rechten Zeichnungshälfte die Aufsicht auf ein Profilband 3 dieses Laufstreifens. Der obere Feineinschnitt 2 ist im unbelasteten Zustand und der untere Feineinschnitt 2 ist im belasteten Zustand beim Abrollen des Laufstreifens dargestellt. Der im unbelasteten Zustand gezeigte Feineinschnitt 2 (rechte Zeichnungshälfte, oben) entspricht dem in der Fig. 2 gezeigten Feineinschnitt. Der Feineinschnitt 2 im belasteten Zustand weist axial verlaufende Öffnungen auf.

### Bezugszeichenliste

### (Teil der Beschreibung)

- 1: Laufstreifenprofil
- 2: Feineinschnitt
- 3: Profilband
- 4: Umfangsrille
- 5: axialer Abschnitt
- 6: axialer Abschnitt
- 7: Vorwölbung
- 8: Bereich größerer Breite
- 9: Bereich größerer Breite
- 10: sich quer erstreckender Abschnitt
- 11: sich quer erstreckender Abschnitt
- 12: Bereich größerer Breite
- 13: Bereich größerer Breite
- 14: Bereich größerer Breite

- a: axialer Abstand zwischen den Abschnitten
- b: maximale Ausdehnung der Vorwölbung in axialer Richtung
- c: normale Breite des Feineinschnittes
- cB: Breite im Bereich größerer Breite

- rR: radiale Richtung
- aR: axiale Richtung
- uR: Umfangsrichtung

## Patentansprüche

1. Laufstreifenprofil (1) eines Fahrzeugreifens mit Profilpositiven wie Profilblöcken oder Laufstreifenbändern (3), welche Feineinschnitte (2) aufweisen, wobei die Feineinschnitte (2) in Aufsicht eine etwa Ω-förmige Geometrie aufweisen:
- mit zwei in etwa in axialer Richtung angeordneten axialen Abschnitten (5,6), welche auf einer gemeinsamen, gedachten Geraden mit einem Abstand (a) zueinander angeordnet sind,
- mit einer zwischen diesen axialen Abschnitten (5, 6) angeordneten mittigen Vorwölbung (7), wobei die Vorwölbung (7) eine in axialer Richtung gemessene maximale Ausdehnung (b) aufweist und
- wobei a < b ist, so dass Hinterschneidungen (10) gebildet sind,
wobei der Feineinschnitt (2), weiterhin in Aufsicht betrachtet, wenigstens einen abschnittsweisen Bereich größerer Breite (8, 9, 12, 13, 14) aufweist, **dadurch gekennzeichnet,**
**dass** die Breite des Feineinschnittes in dem Bereich der größeren Breite (cB) 2 x - 4 x so breit ist wie in den Abschnitten normaler Breite (c).

2. Laufstreifenprofil nach Anspruch 1,
**dadurch gekennzeichnet, dass** der Bereich größerer Breite (12, 13, 14) in einem sich etwa axial erstreckenden Abschnitt des Feineinschnittes angeordnet.

3. Laufstreifenprofil nach Anspruch 1, **dadurch gekennzeichnet, dass** je ein Bereich größerer Breite (8, 9) in je einem der beiden sich quer erstreckenden Abschnitt (10, 11) des Feineinschnittes (2) angeordnet ist und vorzugsweise mehr als 50% der Länge des sich quer erstreckenden Abschnittes (10, 11) einnehmen.

4. Laufstreifenprofil nach einem oder mehreren der vorangehenden Ansprüche, **dadurch gekennzeichnet, dass**, in Aufsicht auf den Feineinschnitt (2), dessen Richtungsänderungen im Feineinschnittverlauf durch Radien gebildet sind.

5. Laufstreifenprofil nach einem oder mehreren der vorangehenden Ansprüche, **dadurch gekennzeichnet, dass** die Übergänge von Bereichen breiter Breite (8, 9, 12, 13, 14) zu Bereichen normaler Breite durch Radien gebildet sind.

6. Laufstreifenprofil nach Anspruch 2, **dadurch gekennzeichnet, dass** je ein Bereich größerer Breite (12, 13) abschnittsweise in den axialen Abschnitten und/oder je ein Bereich größerer Breite (14) abschnittsweise in dem sich axial erstreckenden Bereich der Vorwölbung (7) angeordnet sind.

7. Fahrzeugluftreifen, **dadurch gekennzeichnet, dass** dieser ein Laufstreifenprofil (1) gemäß eines oder mehrerer der vorangehenden Ansprüche aufweist.

8. Fahrzeugluftreifen nach Anspruch 7, **dadurch gekennzeichnet dass** dieser ein Nutzfahrzeugreifen oder ein PKW-Reifen ist.

## Claims

1. Tread profile (1) of a vehicle tyre, having profile positives such as profile blocks or tread bands (3) that have sipes (2), wherein the sipes (2) have an approximately Ω-shaped geometry in plan view:
- having two axial sections (5, 6) which are arranged approximately in an axial direction and which are arranged on a common, imaginary straight line with a spacing (a) to one another,
- having a central bulge (7) arranged between said axial sections (5, 6), wherein the bulge (7) has a maximum extent (b) measured in the axial direction, and
- wherein a < b, such that undercuts (10) are formed,
wherein the sipe (2), considered still in plan view, has at least one sectional region of relatively large width (8, 9, 12, 13, 14),
**characterized**
**in that** the width of the sipe is 2 x - 4 x as wide in the region of the relatively large width (cB) as in the sections of normal width (c).

2. Tread profile according to Claim 1,
**characterized in that** the region of relatively large width (12, 13, 14) is arranged in an approximately axially extending section of the sipe.

3. Tread profile according to Claim 1, **characterized in that** in each case one region of relatively large width (8, 9) is arranged in in each case one of the two transversely extending sections (10, 11) of the sipe (2), and preferably accounts for more than 50% of the length of the transversely extending section (10, 11).

4. Tread profile according to one or more of the preceding claims, **characterized in that**, in a plan view of the sipe (2), the directional changes thereof are formed by radii in the sipe profile.

5. Tread profile according to one or more of the preceding claims, **characterized in that** the transitions from regions of large width (8, 9, 12, 13, 14) to regions of normal width are formed by radii.

6. Tread profile according to Claim 2, **characterized in that** in each case one region of relatively large width (12, 13) is arranged sectionally in the axial sections and/or in each case one region of relatively large width (14) is arranged sectionally in the axially extending region of the bulge (7).

7. Vehicle pneumatic tyre, **characterized in that** said vehicle pneumatic tyre has a tread profile (1) according to one or more of the preceding claims.

8. Vehicle pneumatic tyre according to Claim 7, **characterized in that** it is a utility vehicle tyre or a passenger motor vehicle tyre.

## Revendications

1. Profil de bande de roulement (1) d'un pneu de véhicule comprenant des parties positives telles que des blocs profilés ou des rubans de bande de roulement (3) qui présentent de fines entailles (2), les fines entailles (2), en vue de dessus, présentant une géométrie approximativement en forme de Ω :
- avec deux portions axiales (5, 6) disposées approximativement dans la direction axiale, qui sont disposées sur une droite imaginaire commune à une distance (a) l'une de l'autre,
- avec une partie précintrée centrale (7) disposée entre ces portions axiales (5, 6), la partie précintrée (7) présentant une étendue maximale (b) mesurée dans la direction axiale, et
- a < b, de telle sorte que des contre-dépouilles (10) soient formées,
la fine entaille (2), également en vue de dessus, présentant au moins une région partielle de plus grande largeur (8, 9, 12, 13, 14),
**caractérisé en ce que**
la largeur de la fine entaille dans la région de la plus grande largeur (cB) est 2 fois à 4 fois plus large que dans les portions de largeur normale (c).

2. Profil de bande de roulement selon la revendication 1,
**caractérisé en ce que** la région de plus grande largeur (12, 13, 14) est disposée dans une portion de la fine entaille s'étendant approximativement axialement.

3. Profil de bande de roulement selon la revendication 1, **caractérisé en ce qu'**à chaque fois une région de plus grande largeur (8, 9) est disposée dans l'une des deux portions (10, 11) de la fine entaille (2) s'étendant transversalement et constitue de préférence plus de 50 % de la longueur de la portion s'étendant transversalement (10, 11) .

4. Profil de bande de roulement selon l'une quelconque ou plusieurs des revendications précédentes, **caractérisé en ce que**, en vue de dessus sur la fine entaille (2), ses variations de direction dans l'étendue de la fine entaille sont formées par des arrondis.

5. Profil de bande de roulement selon l'une quelconque ou plusieurs des revendications précédentes, **caractérisé en ce que** les transitions des régions de plus grande largeur (8, 9, 12, 13, 14) aux régions de largeur normale sont formées par des arrondis.

6. Profil de bande de roulement selon la revendication 2, **caractérisé en ce que** dans chaque cas une région de plus grande largeur (12, 13) est disposée en partie dans les portions axiales et/ou à chaque fois une région de plus grande largeur (14) est disposée en partie dans la région de la partie précintrée (7) s'étendant axialement.

7. Pneumatique de véhicule, **caractérisé en ce que** celui-ci présente un profil de bande de roulement (1) selon l'une quelconque ou plusieurs des revendications précédentes.

8. Pneumatique de véhicule selon la revendication 7, **caractérisé en ce que** celui-ci est un pneumatique de véhicule utilitaire ou un pneumatique de véhicule de tourisme.
